(19) Europäisches Patentamt European Patent Office Office européen des brevets

(11) **EP 2 716 993 A1**

(12) **EUROPEAN PATENT APPLICATION**
published in accordance with Art. 153(4) EPC

(43) Date of publication:
**09.04.2014 Bulletin 2014/15**

(51) Int Cl.:
**F24J 2/38** (2014.01)   **F24J 2/18** (2006.01)

(21) Application number: **12790133.8**

(86) International application number:
**PCT/JP2012/060325**

(22) Date of filing: **17.04.2012**

(87) International publication number:
**WO 2012/160905 (29.11.2012 Gazette 2012/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2011 JP 2011115395**

(71) Applicant: **Nabtesco Corporation Tokyo 102-0093 (JP)**

(72) Inventor: **SAKURAI, Kazuhiko Tsu-shi Mie 514-8533 (JP)**

(74) Representative: **Winter, Brandl, Fürniss, Hübner, Röss, Kaiser, Polte - Partnerschaft Patent- und Rechtsanwaltskanzlei Bavariaring 10 80336 München (DE)**

(54) **SOLAR LIGHT COLLECTING SYSTEM**

(57)    A solar concentrating system having a mechanism that corrects the inclination angle of a mirror reflector caused by wind pressure is provided. A solar concentrating system 100 comprises a heliostat 2, an anemometer 4 and a controller 10. The heliostat 2 has a motor 23 configured to adjust a direction of a mirror reflector 26. The controller 10 is configured to output a target angle command to the motor 23. The target angle command includes a target angle first element and a target angle second element. The target angle first element is determined so that reflected light is directed toward a predetermined target position. The target angle second element is determined, based on wind direction and wind speed measured by the anemometer 4, so as to correspond to an estimated value of a twist angle, caused by wind pressure, from an output shaft of an actuator to a support shaft of the mirror reflector.

FIG. 1

## Description

TECHNICAL FIELD

This application claims priority to Japanese Patent Application No. 2011-115395 filed on May 24, 2011, the contents of which are hereby incorporated by reference into the present application. The present invention relates to a solar concentrating system using a heliostat.

BACKGROUND ART

A system utilizing sunlight is a one of the systems for obtaining electrical energy or thermal energy. Some types of systems utilizing sunlight comprise a solar concentrating system that concentrates the sunlight at one point in order to utilize the sunlight efficiently. A device called a heliostat is known for concentrating the sunlight at one point. The heliostat comprises a mirror reflector (usually a moderately concave mirror), and an actuator for adjusting a direction of the mirror reflector.

The heliostat adjusts the direction of the mirror reflector in synchronism with movement of the sun so that reflected light is constantly concentrated at a receiver disposed at one predetermined point (target point). The direction of the mirror reflector must be controlled precisely to constantly direct the reflected light toward the receiver. Unlike a photovoltaic system in which a solar panel may be generally directed toward the sun, the heliostat requires high precision control. Discussion of the control performance of heliostats is introduced in non-patent document 1: "PERFORMANCE OF SOLAR CONCENTRATOR CONTROL SYSTEM", Kenneth W. Stone, Charles W. Lopez, Proceedings of Joint Solar Engineering Conference, ASME 1994.

SUMMARY OF THE INVENTION

As introduced in non-patent document 1, the direction of the mirror reflector (azimuth and inclination angle) is basically determined based on the solar position (azimuth and inclination angle). That is, the direction of the mirror reflector is adjusted, based on the solar position, so that the reflected light is directed toward the receiver. However, there is a possibility that, if the wind is strong, the mirror reflector may be tilted by the wind pressure, and the reflected light will deviate from the receiver. Concentration efficiency falls drastically if the reflected light deviates even slightly from the receiver. The present invention provides a solar concentrating system having a mechanism that corrects a deviation of the direction of the reflected light caused by wind pressure.

A solar concentrating system taught in the present specification comprises a heliostat and a controller. As described above, the heliostat has an actuator that adjusts a direction of a mirror reflector. The actuator may typically be a motor. The controller is configured to output a target angle command to the actuator. The system taught in the present specification further comprises an anemometer, and the controller is configured to determine the target angle command based on a solar position, and on a wind direction and a wind speed measured by the anemometer.

More specifically, the target angle command determined by the controller is composed of a target angle first element determined from the solar position, and a target angle second element determined based on the wind direction and the wind speed. The target angle first element is determined so that reflected light is directed toward a predetermined target position (the position of a receiver). The target angle second element corresponds to an estimated value of a twist angle, caused by wind pressure, from an output shaft of the actuator to a support shaft of the mirror reflector. The existence of this target angle second element corrects the deviation of the direction of the reflected light caused by the wind pressure. Moreover, since the actuator and the support shaft of the mirror reflector are connected via a reduction gear, the "twist angle" may be also equivalent to a twist angle between an input shaft and an output shaft of the reduction gear.

The technique taught in the present specification is suitable for a system that does not directly measure the direction of the mirror reflector. More specifically, the technique taught in the present specification is effective in case the controller has an open loop control system that does not give feedback concerning the angle of the output shaft of the actuator or the angle of the mirror reflector, or in case the controller has a feedback control system that controls the actuator so that a deviation between the target angle and the rotation angle of the output shaft of the actuator becomes zero. In the system taught in the present specification, instead of directly measuring the direction of the mirror reflector and giving feedback, the target angle second element compensates for the inclination angle of the mirror reflector caused by the wind pressure.

BRIEF DESCRIPTION OF THE DRAWINGS

FIG. 1 is an overall drawing of a solar concentrating system;
FIG. 2 is a control block diagram of a heliostat; and
FIG. 3 is a diagram that explains a moment applied to a support shaft of a mirror reflector due to wind pressure.

MODES FOR CARRYING OUT THE INVENTION

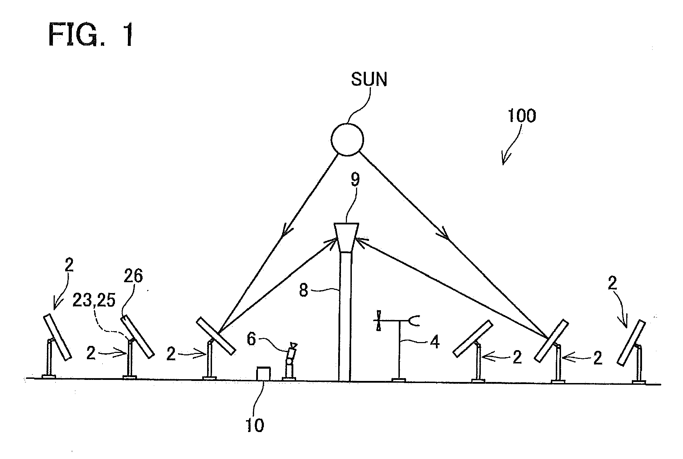

In Fig. 1, a schematic diagram of a solar concentrating photovoltaic system 100 of the embodiment is shown. Below, the solar concentrating photovoltaic system 100 is simply called the system 100. The system 100 generates power by concentrating sunlight at a receiver 9 by means of a plurality of heliostats 2. A vaporizer is disposed on the receiver 9, water is heated by the heat of the concentrated sunlight, and steam is generated. The steam is transferred, via a power tower 8, to a turbine generator (not shown). The steam generated by the sunlight drives the turbine, and generates electric power.

The system 100 further comprises a solar tracking sensor 6 that measures a solar position (azimuth and inclination angle), an anemometer 4 that measures the wind direction and the wind speed of wind flowing near the system 100, and a controller 10 configured to control the heliostats 2.

A motor 23 and a reduction gear 25 are incorporated into each heliostat 2, and the direction of a mirror reflector 26 can be adjusted by the motor 23 and the reduction gear 25. The controller 10 acquires the solar position from sensor data of the solar tracking sensor 6, and controls the direction of the mirror reflector 26 so that reflected light of the sunlight reaches the receiver 9. Specifically, the controller 10 calculates a target angle of the mirror reflector from the solar position and the position of the receiver 9, and outputs that angle to a driver of the motor 23 as a command value (target angle command). Moreover, the mirror reflector 26 curves so as to have a slightly concave surface, such that the reflected light is focused at the position of the receiver 9.

Further, the controller 10 acquires data of the wind direction and the wind speed of the wind flowing near the system 100 from sensor data of the anemometer 4 and, based on that data, corrects the target angle command calculated based on the sensor data of the solar tracking sensor 6. A correction value is determined so as to have a size to compensate for an angle by which the mirror reflector 26 is tilted by wind pressure. The controller 10 calculates the target angle command including the correction value for each of the plurality of heliostats, and sends each target angle command to a driver of the motor of each heliostat. Moreover, each heliostat 2 comprises a driving mechanism for the two axes of the azimuth and inclination angle, and a target angle command is also calculated for each axis. However, for simplifying the explanation below, the description will be given assuming one drive shaft axis of the mirror reflector.

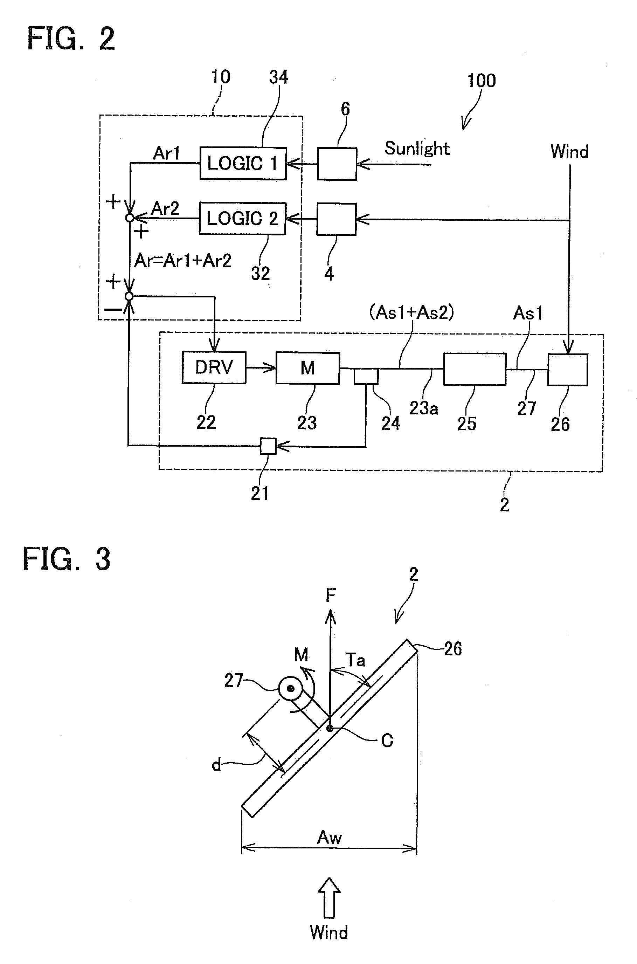

In Fig. 2, a control block diagram of the controller 10 and the heliostat 2 is shown. Moreover, Fig. 2 shows a control block for one heliostat. A similar control block is provided for each heliostat. Below, the angle of the mirror reflector, which is calculated based on the sensor data of the solar tracking sensor 6 so that the sunlight reaches the receiver 9, is called a target angle first element Ar1, and a compensation value that compensates for the inclination angle of the mirror reflector caused by wind direction and wind pressure is called a target angle second element Ar2. A value obtained by adding the target angle first element Ar1 and the target angle second element Ar2 corresponds to a target angle Ar.

First, the configuration of the heliostat 2 will be described with reference to Fig. 2. The mirror reflector 26 is connected to an output shaft of the reduction gear 25 via a support shaft 27. On the other side, an output shaft 23a of the motor 23 is connected to an input shaft of the reduction gear 25. In other words, the mirror reflector 26 is connected to the motor 23 via the reduction gear 25. The reduction gear 25 has a reduction ratio of 8000 as an example. An angle sensor 24 is provided on the output shaft 23a of the motor 23. Specifically, the angle sensor 24 is an encoder, and outputs 100 pulses per rotation of the output shaft. In other words, the resolution of this encoder is 100 PPR (Pulse Per Rotation). In case the reduction ratio is 8000, a resolution equivalent to the reduction gear output shaft of this encoder would be 800, 000 PPR. However, as will be described later, twisting occurs between the input shaft and the output shaft of the reduction gear due to the wind pressure received by the mirror reflector 26, and consequently sensor data of the angle sensor 24 (encoder) cannot be considered to be the actual inclination angle of the mirror reflector. Nevertheless, the controller 10 controls the motor based on the sensor data of the angle sensor 24. Based on the wind direction and the wind speed measured by the anemometer 4, the system 100 compensates for twisting between the input shaft and the output shaft of the reduction gear.

As described above, the sensor data of the angle sensor 24 indicates the rotation angle of the output shaft of the motor 23. This angle is sent to a converter 21. In the converter 21, the rotation angle of the output shaft of the motor 23 is converted to an angle of the mirror reflector 26 and is output. The output of the converter 21 is used for feedback control of the motor 23 as an estimated angle of the mirror reflector.

The motor 23 is driven by a driver 22. The driver 22 receives the angle command from the controller 10, and drives the motor 23 in accordance with the angle command. Moreover, specifically, the motor 23 is current-controlled (i.e., torque-controlled) by the driver 22. It is noted that details are omitted in Fig. 2, and the description continues assuming that the motor 23 and the driver 22 are driven by the angle command.

The controller 10 will be described. The controller 10 acquires the sensor data of the solar tracking sensor 6, and a first calculating unit 34 calculates a mirror reflector angle (the target angle first element Ar1) so that the reflected light is directed toward the receiver 9. A calculation for calculating the angle of the mirror reflector from the solar position and the position of the receiver 9 is also implemented in a conventional concentrating system, and consequently a detailed description is omitted.

Further, based on the sensor data of the anemometer 4, a second calculating unit 32 of the controller 10 calculates a compensation value (the target angle second element Ar2) that compensates for the inclination angle of the mirror reflector caused by wind pressure. The target angle second element Ar2 will be described specifically later. The target angle first element Ar1 and the second element Ar2 are added, becoming the target angle command value Ar. Within the controller 10, the difference between the target angle command value Ar and an estimated angle of the mirror reflector based on the sensor data of the angle sensor 24 is sent to the driver 22. Consequently, the controller 10 controls the heliostat 2 so that the angle of the mirror reflector 26 matches the target angle command Ar. The motor 23 stops at an angle equivalent to the estimated angle (As1 + As2) of the mirror reflector. Below, angle As1 represents the actual angle of the mirror reflector corresponding to the target angle first element Ar1, and angle As2 represents the actual angle corresponding to the target angle second element Ar2.

The compensation value (the target angle second element A2), which compensates for the inclination angle of the mirror reflector caused by the wind direction and the wind speed, will be described. Now, if there is no wind, the angle of the mirror reflector 26 can be expressed by the value obtained by multiplying the reduction ratio of the reduction gear 25 by the rotation angle of the motor output shaft 23 a. At this time, the current angle As of the mirror reflector 26 is equal to the target angle Ar. Further, since the sensor data of the anemometer 4 is zero, the target angle second element Ar2 is zero. That is, if there is no wind, the target angle command Ar output by the controller 10 is Ar1, and the actual angle of the mirror reflector also becomes a value corresponding to the target angle first element Ar1, i.e., it becomes the angle As1. If the actual angle of the mirror reflector is As1, the reflected light is directed accurately toward the receiver 9.

Since the mirror reflector is a huge flat plate, considerable force is generated when subjected to wind, Below, this force is called wind load F. Upon receiving this wind load F, twisting occurs between the output shaft of the motor (the input shaft of the reduction gear) and the support shaft of the mirror reflector (the output shaft of the reduction gear). Consequently, a deviation occurs between the actual angle and the estimated angle of the mirror reflector that is based on the sensor data of the angle sensor 24 which measures the angle of the output shaft 23a of the motor 23. The target angle second element Ar2 compensates for this deviation.

One example of the calculation process of the target angle second element Ar2 will be described with reference to Fig. 3. Moreover, again, for easier understanding of the explanation in the present embodiment, the explanation of the rotation of the mirror reflector is limited to one axis. Fig. 3 shows a view of the mirror reflector 26 seen from a longitudinal direction of the support shaft 27 of the mirror reflector 26. The wind load F received by the mirror reflector 26 due to the wind pressure can be expressed by the following formula (Eq. 1).

[Eq. 1]

$$F = Cw \times q \times Aw \qquad (Eq. 1)$$

Here, coefficient Cw is a coefficient of the wind force, and Cw = 1.2 in case the pressure receiving surface (the surface of the mirror reflector) is a rectangle. Variable Aw is the area of the pressure receiving surface. As shown in Fig. 3, if the angle formed by the wind direction and the plane of the mirror reflector 26 is Ta, and the area of the mirror reflector is S, then Aw = S x cos (Ta). Variable q is called a design velocity pressure, and represents the effect of wind speed V. The design velocity pressure q is given by the following formula (No. 2).

[Eq. 2]

$$q = 0.6 \times V^2 \times E \times I \qquad (Eq. 2)$$

In (Eq. 2), E is an environment variable, and I is an application variable. Eq. 1 and Eq. 2 are described in detail in the Japanese Industrial Standard (JIS). The coefficient of wind force Cw, environment variable E, and application variable I are also defined by the JIS. For details, refer to "JIS C 8955".

As shown in Fig. 3, wind load F is assumed to concentrate at the center C of the mirror reflector 26. Letting d be the distance from the center of the support shaft 27 that supports the mirror reflector 26 to the mirror reflector center C, moment M acting on the support shaft 27 due to the wind pressure is obtained by the following formula (Eq. 3).

[Eq. 3]

$$M = F \times d \times \cos(Ta) \qquad \text{(Eq. 3)}$$

The support shaft 27 is twisted by this moment M. Now, letting K be the torsional rigidity between the output shaft 23a of the motor (the input shaft of the reduction gear) and the support shaft of the mirror reflector 27 (the output shaft of the reduction gear), twist angle As2 (the inclination angle of the mirror reflector) due to the wind pressure is expressed as M = K x As2. As a result, the inclination angle Ar2 of the mirror reflector due to the wind pressure can be expressed by the following formula (Eq. 4).

[Eq. 4]

$$Ar2 = \frac{1}{K} \times Cw \times q \times Aw \times d \times \cos(Ta) \qquad \text{(Eq. 4)}$$

The angle Ar2 obtained in (Eq. 4) is equivalent to the target angle second element. As shown in (Eq. 2), the wind speed V is included in the design velocity pressure q. Further, the angle Ta formed by the plane of the mirror reflector 26 and the wind direction is equal to the wind direction. The wind speed V and the wind direction Ta are measured by the anemometer 4.

The second calculating unit 32 of Fig. 2 calculates, based on (Eq. 4), a compensation value that compensates for the inclination angle of the mirror reflector caused by the wind direction and the wind pressure, i.e., it calculates the target angle second element Ar2. As shown in Fig. 2, when the target angle command value Ar = Ar1 + Ar2, the output shaft 23a of the motor 23 forms an angle corresponding to the target angle command value Ar. The angle of the output shaft 23a at this time should be equivalent to the angle of the support shaft of the mirror reflector As1 + As2. However, since twisting caused by wind pressure is generated between the output shaft 23a of the motor 23 and the support shaft 27 of the mirror reflector, the angle of the support shaft 27 of the mirror reflector is not actually As1 + As2. The support shaft 27 of the mirror reflector is twisted by the angle As2 by the wind pressure. Since this twist angle As2 is offset by the target angle second element Ar2, ultimately, the angle of the mirror reflector that is realized becomes As1. Thus, even in wind, the angle of the mirror reflector 26 becomes As1, and the reflected light is directed accurately toward the receiver.

As described above, by adjusting the angle of the mirror reflector by means of the target angle command value that includes the compensation value (the target angle second element) which offsets the inclination angle of the mirror reflector due to the wind pressure, the reflected light can be directed accurately toward the receiver 9 even in wind.

Points to keep in mind for the system 100 of the embodiment will be mentioned. In the system 100 of the embodiment, feedback control of the rotation angle of the output shaft of the motor was adopted. In case the performance of the motor driver is sufficiently high, an open loop control for the rotation angle of the output shaft of the motor may be adopted.

Further, in the embodiment, the solar tracking sensor was used to obtain the solar position. Instead, the solar position may be obtained by calculating from GPS data (latitude, longitude, date and time).

Further, the target angle command output by the controller 10 may include a third element in addition to the target angle first element Ar1 and second element Ar2. Here, the target angle third element is determined so as to have a size to compensate for the inclination angle of the mirror reflector caused by the weight of the mirror reflector.

The torsional rigidity K between the output shaft 23a of the motor (the input shaft of the reduction gear) and the support shaft 27 of the mirror reflector (the output shaft of the reduction gear) may be obtained in advance by experiments, etc.

While specific examples of the present invention have been described above in detail, these examples are merely illustrative and place no limitation on the scope of the claims. The technology described in the claims also encompasses various changes and modifications to the specific examples described above. The technical elements explained in the present description or drawings provide technical utility either independently or through various combinations. The present invention is not limited to the combinations described at the time the claims are filed. Further, the purpose of the examples illustrated by the present description or drawings is to satisfy multiple objectives simultaneously, and satisfying any one of those objectives gives technical utility to the present invention.

## Claims

1. A solar concentrating system comprising:

a heliostat that has an actuator that adjusts a direction of a mirror reflector;
a controller configured to output a target angle command to the actuator; and
an anemometer;
wherein the controller is configured to determine the target angle command based on a solar position and on a wind direction and a wind speed measured by the anemometer.

2. The solar concentrating system of claim 1, wherein the target angle command determined by the controller is composed of a target angle first element determined from the solar position and a target angle second element determined based on the wind direction and the wind speed.

3. The solar concentrating system of claim 1 or 2, further comprising an angle sensor that measures a rotation angle of an output shaft of the actuator;
wherein the controller controls the actuator so as to cause a deviation between the target angle and a measured angle measured by the angle sensor to become zero.

4. The solar concentrating system of any one of claims I to 3, wherein:

the target angle first element is determined so that reflected light is directed toward a predetermined target position; and
the target angle second element corresponds to an estimated value of a twist angle, caused by wind pressure, from an output shaft of the actuator to a support shaft of the mirror reflector.

# FIG. 1

## FIG. 2

## FIG. 3

<table>
<tr><td colspan="2" align="center">**INTERNATIONAL SEARCH REPORT**</td><td>International application No.</td></tr>
<tr><td colspan="2"></td><td>PCT/JP2012/060325</td></tr>
</table>

A. CLASSIFICATION OF SUBJECT MATTER
*F24J2/38*(2006.01)i, *F24J2/18*(2006.01)i

According to International Patent Classification (IPC) or to both national classification and IPC

B. FIELDS SEARCHED

Minimum documentation searched (classification system followed by classification symbols)
F24J2/38, F24J2/18, G02B7/182, G05D3/00

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-002164 A  (KGK Corp.),<br>07 January 2010 (07.01.2010),<br>entire text; all drawings<br>(Family: none) | 1-4 |
| A | JP 2008-270698 A  (Daulenc Co., Ltd.),<br>06 November 2008 (06.11.2008),<br>entire text; all drawings<br>& KR 10-0819861 B1      & CN 101291123 A<br>& TW 200843128 A | 1-4 |

☒  Further documents are listed in the continuation of Box C.          ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>11 May, 2012 (11.05.12) | Date of mailing of the international search report<br>22 May, 2012 (22.05.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2012/060325 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2006/025449 A1 (Tokyo Institute of Technology), 09 March 2006 (09.03.2006), paragraph [0006] & EP 1793181 A1 & WO 2006/025449 A1 & CN 101027524 A & AU 2005278448 A & AU 2009201095 A & CN 101825349 A | 1-4 |
| A | JP 2007-180484 A (Yugen Kaisha Tec Okazaki), 12 July 2007 (12.07.2007), claim 7 (Family: none) | 1-4 |
| A | JP 2010-007976 A (Mitsui Engineering & Shipbuilding Co., Ltd.), 14 January 2010 (14.01.2010), paragraphs [0009] to [0020] & US 2011/0094499 A1 & WO 2009/157317 A1 & AU 2009263471 A & CN 102077035 A | 1-4 |
| A | JP 2002-542615 A (Shingleton, Jefferson), 10 December 2002 (10.12.2002), paragraph [0008] & US 6058930 A1 & EP 1169604 A & WO 2000/063625 A1 & DE 60015950 T & AT 282802 T & ES 2232442 T & PT 1169604 E | 1-4 |
| A | JP 2010-159962 A (Mitsui Engineering & Shipbuilding Co., Ltd.), 22 July 2010 (22.07.2010), claim 1 (Family: none) | 1-4 |
| A | JP 2009-109136 A (Mitsui Engineering & Shipbuilding Co., Ltd.), 21 May 2009 (21.05.2009), paragraph [0012] & US 2010/0243031 A1 & WO 2009/057677 A1 & AU 2008319907 A & CN 101842644 A & AU 2011201563 A | 1-4 |

Form PCT/ISA/210 (continuation of second sheet) (July 2009)

**EP 2 716 993 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011115395 A